# EUROPÄISCHE PATENTSCHRIFT

(11) **EP 0 606 327 B1**
(45) Veröffentlichungstag und Bekanntmachung des Hinweises auf die Patenterteilung: **27.05.1998**
(21) Anmeldenummer: 92920603.5
(22) Anmeldetag: 29.09.1992
(51) Int. Cl.: G01N 31/22, G01N 21/80

(54) **SENSORMEMBRAN ZUR ANZEIGE DES pH-WERTES EINER PROBE, IHRE HERSTELLUNG UND VERWENDUNG**
SENSOR MEMBRANE FOR DISPLAYING THE pH-VALUE OF A SAMPLE, METHOD OF MANUFACTURING THE MEMBRANE, AND ITS USE
MEMBRANE DETECTRICE POUR L'AFFICHAGE DU pH D'UN ECHANTILLON, SA FABRICATION ET SON UTILISATION

(30) Priorität: 30.09.1991 AT 1961/91
(43) Veröffentlichungstag der Anmeldung: 20.07.1994
(73) Patentinhaber: MERCK PATENT GmbH, D-64271 Darmstadt (DE)
(72) Erfinder: WOLFBEIS, Otto, A-8010 Graz (AT)
(86) Internationale Anmeldenummer: EP9202245
(87) Internationale Veröffentlichungsnummer: WO9307483

(56) Entgegenhaltungen:
- US-A- 4 200 110
- US-A- 4 965 087
- ANALYTICAL CHEMISTRY Bd. 61, Nr. 3, 1. Februar 1989, COLUMBUS US Seiten 202 - 205 Z. ZHUJUN ET AL 'Poly(vinyl) alcohol as a substrate for indicator immobilization for fiber-optic chemical sensors'
- O.S. WOLFBEIS: 'Fiber Optic Chemical Sensors and Biosensors' 1991, CRC Press, Boca Raton, US Band 1, Kapitel 8, Seiten 359-384 Abschnitt II.D: 'Dye Immobilization'

## Beschreibung

Die Erfindung betrifft eine Sensormembran zur reversiblen optischen Anzeige des pH-Wertes einer Probe, mit einem mechanisch stabilen Trägerelement und einer darauf angebrachten Indikator-Farbstoffschicht. Ferner betrifft die Erfindung ein Verfahren zur Herstellung einer Sensormembran zur reversiblen optischen Anzeige des pH-Wertes einer Probe, wobei auf ein mechanisch stabiles Trägerelement eine Schicht aus Indikator-Farbstoff aufgebracht wird. Schließlich bezieht sich die Erfindung auch auf die Verwendung einer derartigen Sensormembran.

Die optische Messung von pH-Werten geht zurück auf den Befund, daß gewisse Farbstoffe (wie zum Beispiel Lackmus) auf den pH-Wert einer Probe mit einer Änderung der Farbe reagieren und somit den pH-Wert einer Probe anzuzeigen in der Lage sind. Eine Auswahl von geeigneten Farbstoffen (Indikatoren) samt der pH-Bereiche, innerhalb derer sie umschlagen, findet sich z.B. in "Indicators", E. Bishop, Pergamon Press, 1972, Kapitel 3.

Die ersten pH-sensitiven Streifenmaterialien wurden durch Eintauchen eines Papierstreifens in eine Farbstofflösung gewonnen. Der Farbstoff ist in solchen Farbstreifen durch Absorption an den Träger gebunden. Dies hat den Nachteil, daß der Farbstoff durch die Probe ausgewaschen werden kann und macht solche Streifen für sensorische (on-line) Anwendungen ungeeignet, da das optisch abgetastete Signal durch Auswaschen, und nicht durch pH-Änderungen, immer schwächer wird.

Durch chemische oder physikalische Immobilisierung von Farbstoffen kann das Auswaschen verhindert werden. Immobilisierte pH-sensitive Materialien sind somit zur kontinuierlichen Messung von pH-Werten geeignet. Verfahren zur Immobilisierung von pH-Indikatoren auf festen Trägern (Cellulose, Agarose, Poly(methylacrylate), Polyacrylamid, Glas) sind aus dem Stand der Technik bekannt.

Methoden und Anordnungen zur kontinuierlichen optischen Messung von pH-Werten sind in der Literatur beschrieben worden. In EP 137.157 und US 4.548.907 wird ein pH-Sensor beschrieben, in welchem ein pH-Indikator auf eine Membran immobilisiert wird und die Änderungen der Fluoreszenzintensität mit dem pH-Wert über einen Lichtleiter abgefragt werden. Eine ebenfalls faseroptische Anordnung, welche auf dem Prinzip der Lichtreflexion beruht, wurde in US 4.200.110 und 4.476.870 beschrieben. Auch in US 4.166.804 wird die Immobilisierung eines Farbstoffs und die Verwendung des entstehenden Materials zur kontinuierlichen Messung von pH-Werten beschrieben. In US 4.716.118 wird die Immobilisierung von pH-Indikatoren beschrieben sowie die Messung der Ionenstärke einer Lösung über eine genaue Messung des pH-Wertes. Ein ähnliches, in US 4.376.827 beschriebenes Verfahren, erlaubt die Bestimmung der Ionenstärke mit Hilfe eines Teststreifens.

Weitere optische pH-Meßverfahren finden sich in US 4.473.650, 4.318.709 und 4.532.216. In US 4.568.518 wird eine pH-sensitive fluoreszierende Cellulosemembran mit einem Indikator beschrieben, der an ein inter-penetrierendes Netzwerk von Poly(ethylenimin) gebunden ist. Schließlich wird in EP-A 126.600 ein optischer Sensor beschrieben, in welchem der Indikator gebunden an Ionenaustauscherkügelchen vorliegt, während in US 4.321.057 ganz allgemein ein faseroptischer Sensor mit einem nicht näher spezifizierten pH-sensitiven Material beschrieben wird.

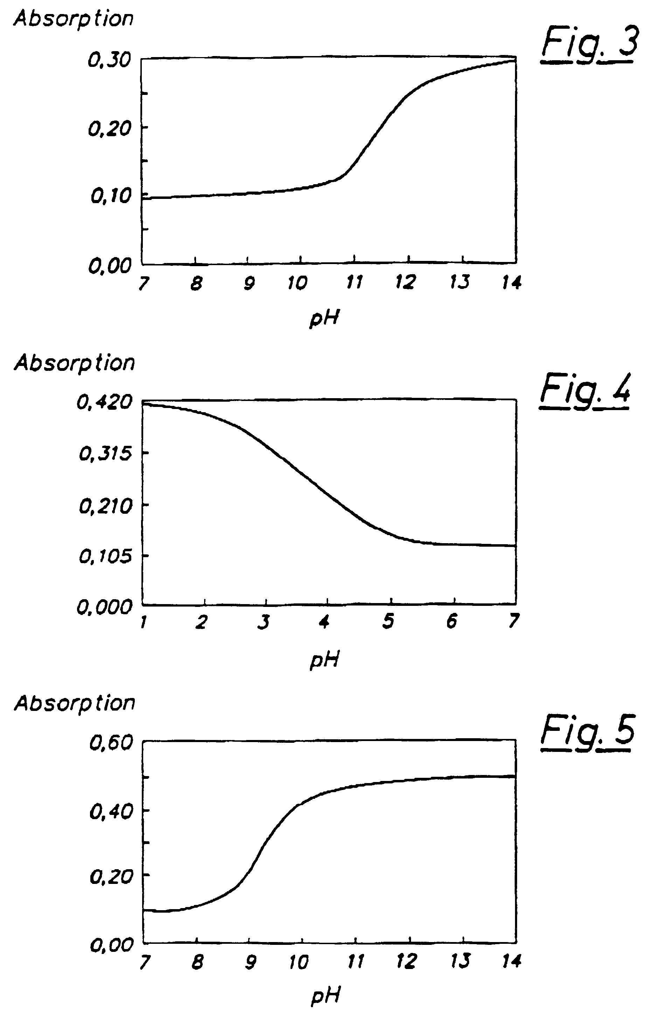

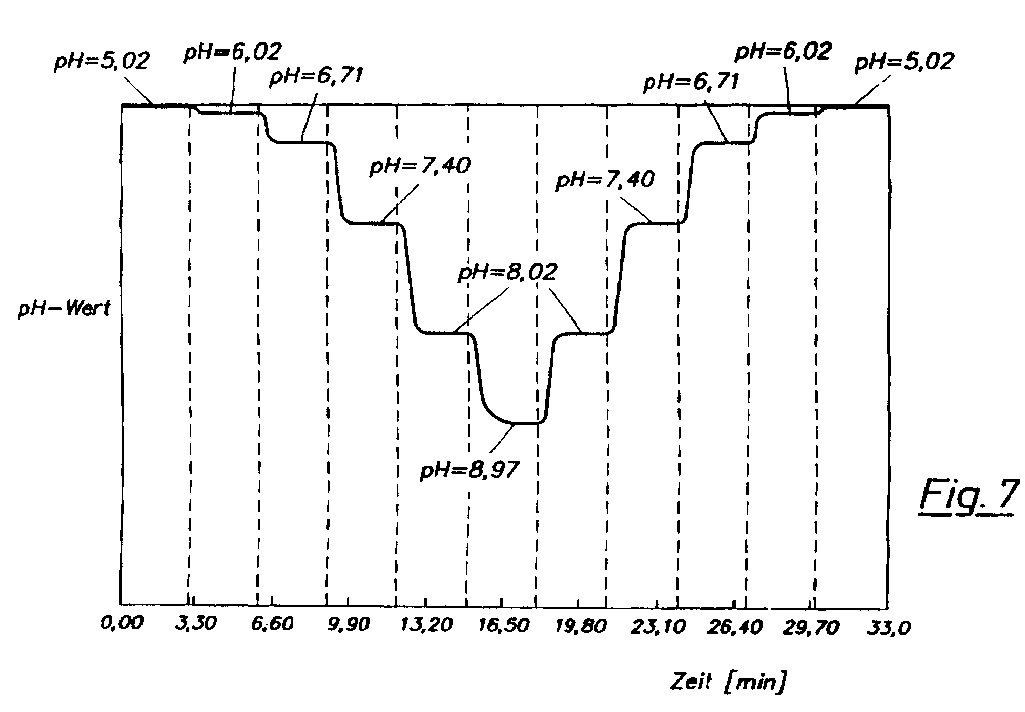

In Anal. Chem. 58, 2496 (1986) wird die Verwendung eines kommerziell erhältlichen pH-Indikatorstreifens als Sensor in einem automatisierten Analysensystem beschrieben. Der Papierstreifen wird in eine Durchflußzelle eingebracht und seine Farbänderungen über einen Lichtleiter abgetastet. Die Ansprechzeit dieses Sensors beträgt 3 bis 15 Minuten, wie man den Figuren 5B und 7B der zitierten Arbeit entnehmen kann. Die Ansprechgeschwindigkeit nimmt dabei mit abnehmender Pufferkapazität beträchtlich ab. Derart lange Ansprechzeiten sind für die Praxis ungeeignet, und aus diesem Grund wird von den Autoren die sogenannte "transiente Arbeitstechnik" eingesetzt, d.h., man wartet nicht die Signalkonstanz ab, sondern mißt nach einem definierten Zeitintervall.

In Anal. Chem. 47, 348 (1975) werden wiederverwendbare, an Glas gebundene pH-Indikatoren beschrieben, während in Anal. Chem. 60, 404 (1988) ein optischer pH-Sensor beschrieben wird, welcher durch chemische Modifikation eines porösen Polymerfilms erhalten wurde. Beide Typen von Sensoren sind sehr aufwendig in der Herstellung, erfordern eine beträchtliche Erfahrung auf dem Gebiet der Immobilisierungs-Chemie, und sind schlecht in reproduzierbarer Weise herzustellen, besonders wenn es sich um Glas als Träger handelt.

Ein Nachteil aller dieser Sensoren besteht, wie oben angeführt, darin, daß die Ansprechzeiten mit 1,0 bis 20 Minuten relativ lang sind, was gegenüber den kurzen Ansprechzeiten der pH-Elektroden einen beträchtlichen Nachteil bedeutet. Diese Elektroden sind allerdings im Gegensatz zu den hier in Rede stehenden Membranen nicht einfach wie ein Teststreifen vor Ort einsetzbar und auch nicht als einfache und billige Wegwerfteile konzipierbar. Außerdem funktionieren pH-Elektroden nur in stark gepufferten Systemen.

Aus Anal. Chem. 59, 437 (1987) ist bekannt, wie man Farbstoff und Träger als extrem dünnen Film auf den Lichtleiter aufbringt, um die Ansprechzeiten zu verkürzen. Ähnliches ist aus Anal. Sci. 3,7 (1987) bekannt.

Diesem Verfahren haften ein oder mehrere der folgenden Nachteile an: Sie sind aufwendig, liefern schlecht reproduzierbare Ergebnisse und liefern wegen der geringen Menge an Farbstoff, welche sich in der wenige nm dicken Schicht befindet, nur ein sehr schwaches Signal, so daß nur eine schlechte Signalauflösung erreicht wird. Den käuflichen Indikatorpapieren wiederum haftet der Nachteil an, daß sie für ungepufferte Lösungen praktisch nicht geeignet sind, da die relativ große Menge an immobilisiertem Farbstoff bereits eine beträchtliche Pufferkapazität darstellt. Schließlich sind diese Sensormembranen auch optisch trüb, so daß sie nur in Reflexion, nicht aber in Absorption (im Durchlicht) vermessen werden können. Eine Ausnahme bilden lediglich die Methoden zur Immobilisierung auf Glas, wodurch nach der oben zitierten Methode aus Anal. Chem. 47, 348 (1975) ein transparentes Material erhalten wird, welches aber für praktische Anwendungen wegen der Brüchigkeit und schlechten Massenfertigbarkeit von Glassensoren ungeeignet ist.

Aufgabe der vorliegenden Erfindung ist es, eine Sensormembran der eingangs genannten Art sowie ein Verfahren zur Herstellung einer derartigen Sensormembran so zu verbessern, daß die genannten Nachteile vermieden werden und daß insbesondere eine einfache Herstellung bzw. auch Massenfertigung von kostengünstigen und damit auch als Einmal-Sensor geeigneten Sensormembranen mit kurzer Ansprechzeit möglich wird, wobei auch eine bisher nicht mögliche Verwendung derartiger Sensormembranen in ungepufferten oder schwach gepufferten Systemen möglich werden soll.

Gegenstand der vorliegenden Erfindung ist eine Sensormembran zur reversiblen optischen Anzeige des pH-Wertes einer Probe, mit einem mechanisch stabilen Trägerelement und einer darauf aufgebrachten Indikator-Farbstoffschicht, dadurch gekennzeichnet, daß auf mindestens einer Seite des Trägerelements eine hydrophile Aufnahmeschicht aus Cellulose, Gelatine, Hydrogel, hydrophilen Polyvinylalkoholen, oder Gemischen dieser Substanzen angeordnet ist, welche den Indikator-Farbstoff in immobilisierter Form aufweist. Das entsprechende Verfahren zur Herstellung der Sensormembran ist erfindungsgemäß dadurch gekennzeichnet, daß auf das Trägerelement eine hydrophile Aufnahmeschicht aus Cellulose, Gelatine, Hydrogel, hydrophilen Polyvinylalkoholen, oder Gemischen dieser Substanzen aufgebracht wird, in welche der Indikator-Farbstoff eingebracht und immobilisiert wird. Dies kann vor oder nach der Aufbringung der Aufnahmeschicht auf das Trägerelement erfolgen.

Erfindungsgemäß wird also die Sensormembran so ausgebildet, daß man auf das Trägerelement in üblicherweise nur sehr dünner Schicht von 0,1 bis 20 µm, vorzugsweise 0,1 bis 0,5 µm, eine hydrophile zweite Aufnahmeschicht aufzieht, die den eigentlichen Indikator-Farbstoff trägt bzw. aufweist. Das Trägerelement dient demnach nur als Unterlage zur mechanischen Verstärkung, während der eigentlichen Sensorfilm in extrem dünner hydrophiler Schicht aufgebracht ist.

Die Aufnahmeschicht besteht aus Cellulose, Gelatine, Hydrogel, hydrophilen Polyvinylalkoholen oder Gemischen dieser Substanzen. Das die Aufnahmeschicht samt Indikator-Farbstoff aufweisende Trägerelement beteht gemäß der Erfindung vorzugsweise aus hydrophobem, optisch transparentem Material, vorzugsweise aus der Gruppe: Polyester vom Typ der Phthalsäureester, Polycarbonate, Polyvinylchloride, Polyamide, Silicone bzw. vernetze Polyacrylamide oder Polyvinylalkohole. Besonders bevorzugt sind dabei für das Trägerelement Polyester vom Typ der Phthalsäureester und für die hydrophile Aufnahmeschicht Cellulose.

Auf die hydrophile dünne Deckschicht können nun in an sich bekannter Weise die entsprechenden pH-Indikatorfarbstoffe immobilisiert werden. Alternativ kann man zuerst den Farbindikator auf die dünne hydrophile Membran immobilisieren, worauf diese auf den hydrophoben Träger aufgebracht wird.

Üblicherweise werden Reaktivindikatoren eingesetzt, also solche, welche neben der pH-empfindlichen Absorption auch eine chemische Funktion (R) besitzen, mit deren Hilfe eine chemische Bindung an die hydrophobe Trägerschicht ermöglicht wird. Derart kovalent gebundene Farbstoffe (Indikatoren) lassen sich nicht mehr auswaschen.

Typische chemische Strukturen von Reaktivindikatoren sind, z.B., folgende:

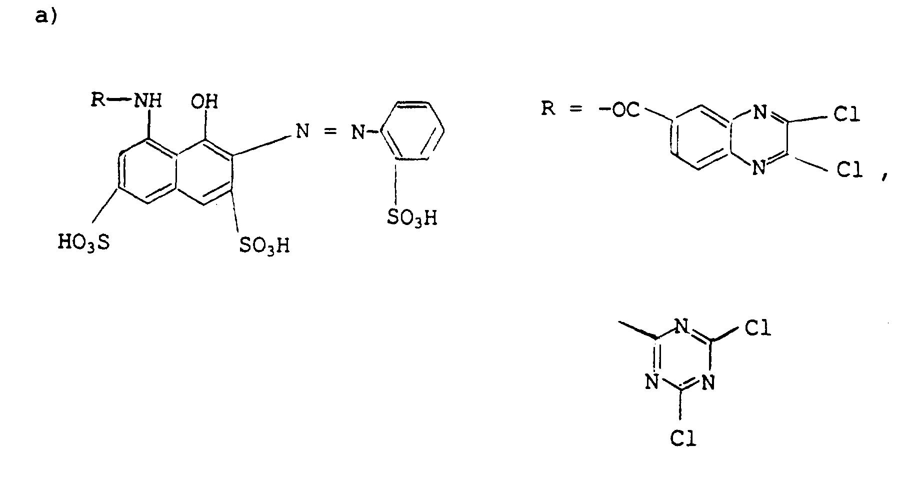

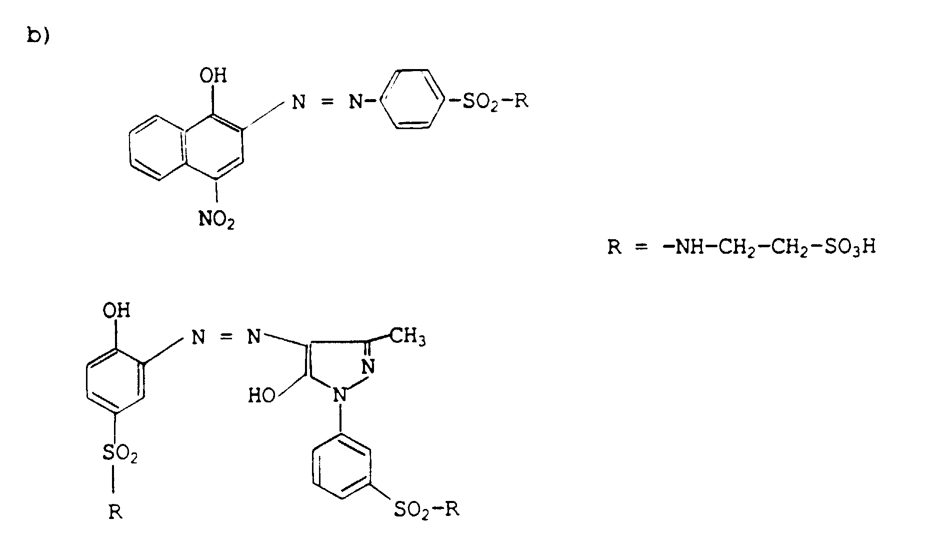

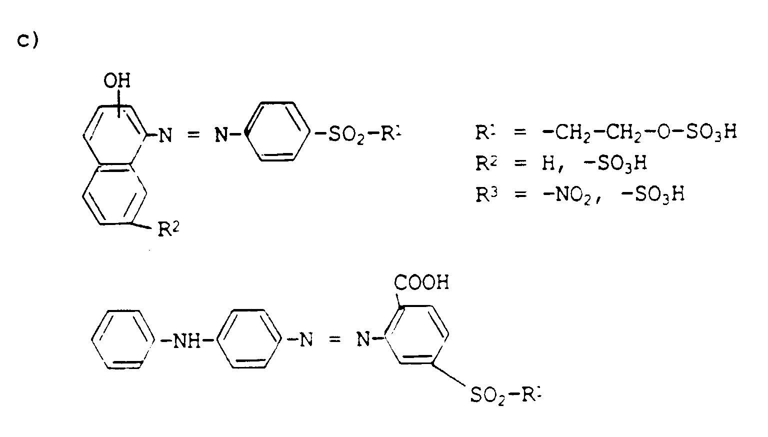

Die so erhaltenen Sensorschichten sind im Gegensatz zu bisherigen Schichten optisch vollkommen transparent und somit einer photometrischen Absorptions-Messung ohne weiteres zugänglich. Außerdem sind sie zu geringen Kosten in großer Menge herstellbar, da die Beschichtung und Immobilisierung des Farbstoffs praktisch im on-line-Betrieb erfolgen kann. Schließlich besitzen die so erhaltenen Membranen auf Grund der dünnen Indikatorschicht eine sehr geringe Pufferkapazität, was sie für Zwecke der Messung von ungepufferten Lösungen (z.B. beim Nachweis des sauren Regens) sehr geeignet macht, und eine schnelle Ansprechzeit, da die Diffusion der Protonen durch die dünne hydrophile Indikatorschicht viel schneller erfolgen kann als in bisher bekannten, relativ dicken Sensorschichten.

In einer Ausgestaltung der Membran kann diese, wie erwähnt, auch beidseitig beschichtet sein, insbesondere wenn die Auswertung durch Absorptions- statt durch Reflexions- oder Fluoreszenzmessungen erfolgt, und wenn die Probe an beiden Seiten zutreten kann.

Die Auswertung der Farbintensität der Sensormembran kann auch mit Hilfe faseroptischer oder intergriert optischer Methoden erfolgen. In diesem Fall kann die hydrophile dünne Schicht direkt auf hydrophobes Lichtwellenleitermaterial aufgebracht werden. Einschlägige Anordnungen sind z.B. beschrieben im Band 1 des Buchs "Fiber Optic Chemical Sensors and Biosensors" von O. S. Wolfbeis, Verlag CRC Press, Boca Raton, Florida, 1991, Kapitel 2 und 3.

In einer anderen Ausgestaltung der erfindungsgemäßen Membranen können diese auch als Referenzelemente eingesetzt werden. Dazu wird ein Teil der Membranoberfläche mit einem gas- bzw. protonen-impermeablen Material angedeckt oder auch mit der Probe überhaupt nicht in Kontakt gebracht. Man erhält so eine Fläche, deren Farbintensität von der Probe nicht verändert wird und bei photometrischer Auswertung als Referenzelement dienen kann, dessen Signal eine Referenzmeßgröße darstellt.

Die erfindungsgemäßen pH-Sensoren können nicht nur zur Messung von pH-Werten verwendet werden, sondern bei geeigneter Ausgestaltung, insbesondere durch Abdecken mit gaspermeablen Schichten, zur optischen Erfassung von sauren oder alkalischen Gasen dienen, wie dies z.B. in Band 2, Kapitel 11, des oben zitierten Buches beschrieben ist. Schließlich können solche Sensoren auch als Übersetzerelemente für biochemische Reaktionen dienen, bei denen sich der pH-Wert verändert. Auch dies wurde an sich bereits beschrieben, z.B. in Anal. Chem. 60, 433 (1988) für die Bestimmung von Penicillin.

Die Erfindung wird im folgenden noch anhand der schematischen Zeichnungen näher erläutert. Fig. 1 zeigt den Schichtaufbau einer planaren optischen pH-sensitiven Membran im Kontakt mit dem Probenmedium. Die Aufnahmeschicht mit dem Indikator-Farbstoff ist nur an einer Seite aufgezogen. Die Fig. 2 zeigt die Absorptionsspektren der sauren bzw. alkalischen Form einer erfindungsgemäßen pH-Sensormembran (Beispiel) und die Fig. 3-5 die pH-abhängigen Absorptionsänderungen der Sensormembran mit unterschiedlichen Farbstoffbelegungen. Durch Wahl verschiedener Farbstoffe kann der jeweils gewünschte pH-Bereich eingestellt werden. Fig. 6 zeigt eine faseroptische Anordnung, bestehend aus einer Lichtquelle, einem Lichtleiter, der Sensormembran an der Spitze und einem Lichtleiter, welcher das gesammelte reflektierte Licht (oder Fluoreszenzlicht) einem Photodetektor zuleitet. Fig. 7 zeigt das Ansprechverhalten der Sensormembran gemäß nachfolgendem Beispiel gegenüber verschiedenen pH-Werten und Fig. 8 zeigt einen Langzeittest mit einer derartigen Sensormembran.

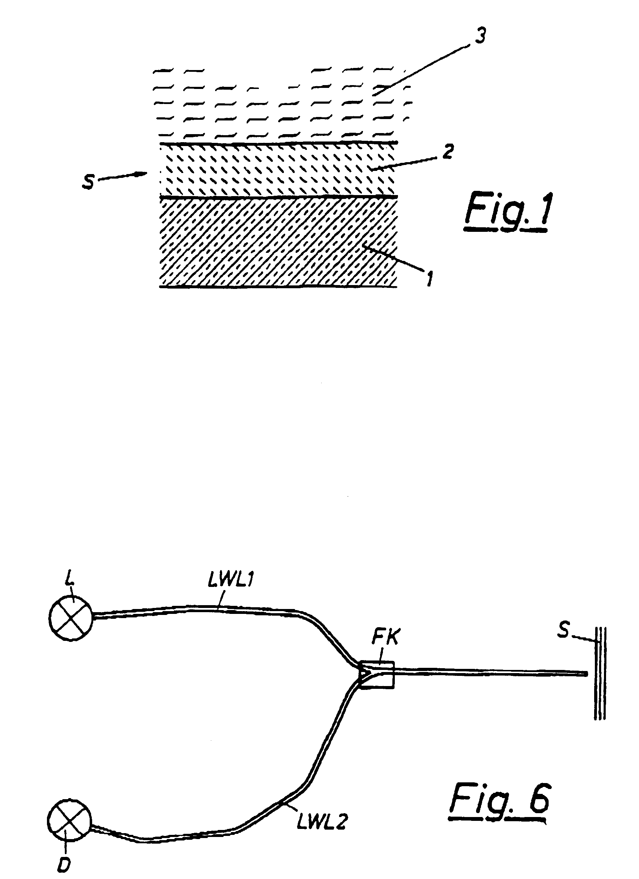

Fig. 1 (nicht maßstabgerecht) zeigt den Querschnitt durch ein Beispiel einer erfindungsgemäßen Sensormembran S. Auf einer typischerweise etwa 200 µm dicken Polyestermembran als Trägerelement 1 befindet sich eine dünne Aufnahmeschicht 2 aus Cellulose, welche chemisch angefärbt ist. Über diese Membran fließt die Probenlösung 3, welche die Farbe der Celluloseschicht bestimmt. Die Farbe kann mit Hilfe entsprechender opto-elektronischer Anordnungen abgetastet werden, unter anderem auch mit Hilfe faseroptischer Lichtwellenleiter. Um zu verhindern, daß Umgebungslicht die Messung der Reflektivität oder Fluoreszenz der Membran verhindert, kann diese auch mit einer sogenannten optischen Isolierung abgedeckt sein. Dazu deckt man die Membran mit einer protonenpermeablen, aber optisch undurchlässigen dünnen Schicht ab, z.B. mit weiß pigmentiertem Hydrogel.

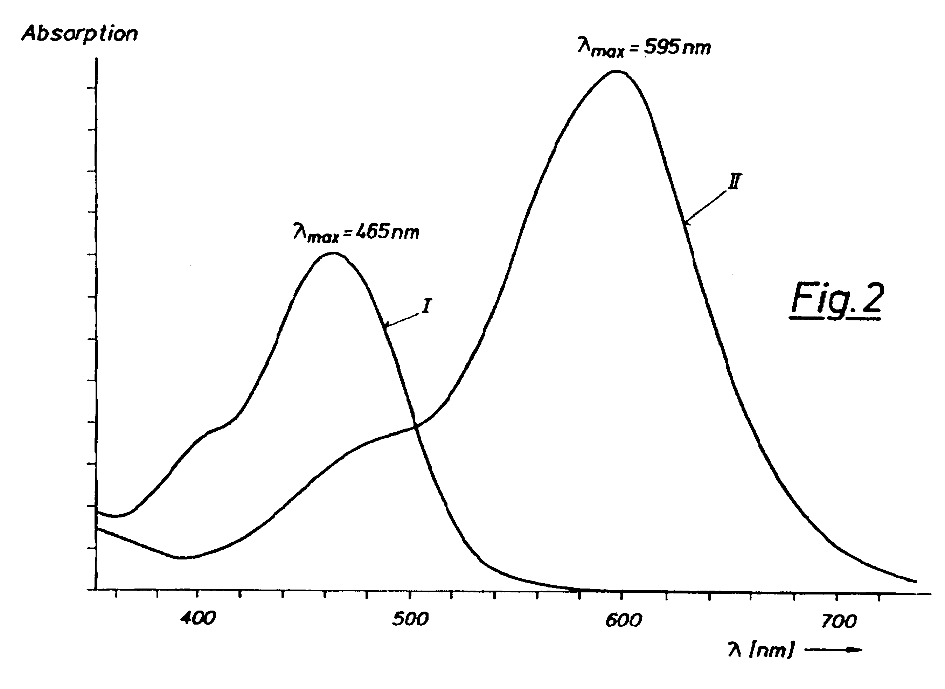

Fig. 2 zeigt die Absorptionsspektren der nach dem Beispiel erhaltenen Sensormembran bei saurem (4,00) und alkalischem (10,00) pH-Wert. Deutlich erkannbar ist, daß das Absorptionsmaximum der alkalischen Form (II) bei 595 nm gut mit der Emissionswellenlänge einer gelben LED (590 nm) übereinstimmt und mit Hilfe dieser gut vermessen werden kann.

In den Fig. 3-5 dargestellt, sind die bei 565 nm gemessenen Änderungen der Absorptionsintensitäten verschiedener Membranen, welche durch Immobilisierung der als Indikator-Farbstoff verwendeten Verbindungen 2-[4-(2-Hydroxy-7-sulfo-1-naphthylazo)-3-nitrophenylsulfonyl] -ethylhydrogensulfat (Fig. 3), 2-[3(4-Anilinophenylazo)-4-carboxyphenylsulfonyl]-ethylhydrogensulfat (Fig. 4) und 2-[3-(4-Hydroxy-1-naphthylazo)-4-sulfophenylsulfonyl]-ethylhydogensulfat (Fig. 5) erhalten werden.

Fig. 6 zeigt eine Anordnung zur faseroptischen Messung der Reflektivität einer erfindungsgemäßen Sensormembran. Licht aus einer Lichtquelle L wird in einen Lichtwellenleiter LWL 1 eingekoppelt und auf die in Kontakt mit der Probe stehende Sensormembran S gelenkt. Das von der Membran als Funktion des pH-Wertes reflektierte Licht wird von derselben Faser wieder aufgenommen und nach Passieren eines Faserkopplers FK über den Lichtwellenleiter LWL 2 einem Photodetektor D zugeführt. Dieser liefert einen Photostrom, welcher in einem Vorverstärker in eine Spannung umgewandelt und dann einer Verstärker-, Digitalisier- und schließlich einer Auswerte-Einheit zugeführt wird. Mit Hilfe dieser Anordnung sind vor allem on-line und remote-Messungen möglich.

Fig. 7 zeigt die mit Hilfe eines faseroptischen Photometers (entsprechend Fig. 6) gemessene Reflektivität der nach Beispiel 1 erhaltenen Sensormembran bei verschiedenen pH-Werten. Die Einstellzeiten liegen durchwegs im Bereich zwischen 10 und 30 Sekunden, mit Ausnahme des Übergangs von pH 8,02 zu 8,97, wo sie etwa 90 Sekunden beträgt.

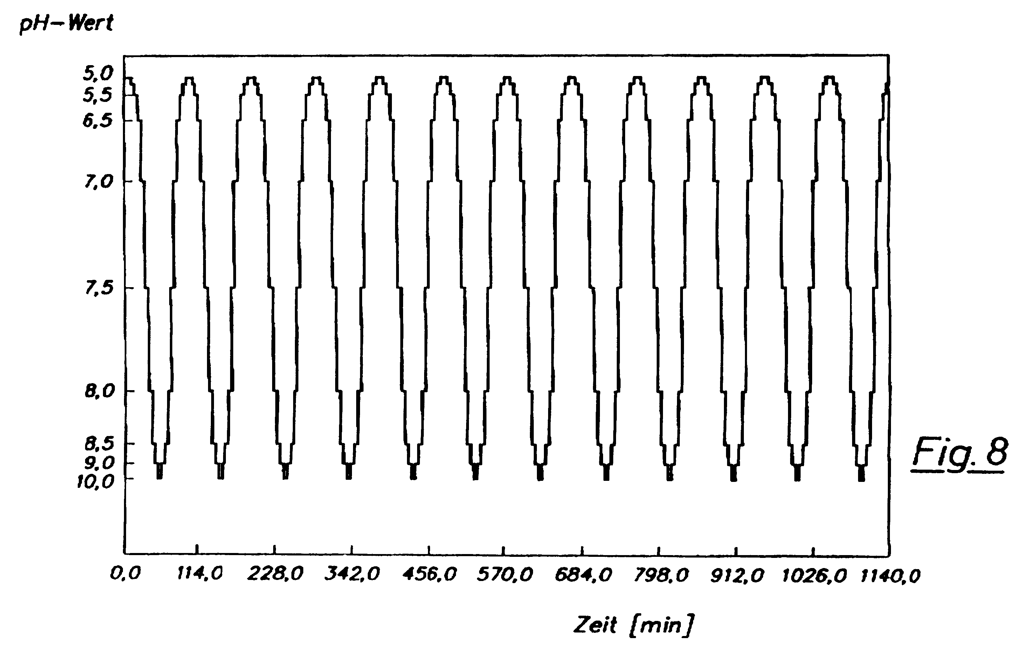

Fig. 8 zeigt einen über 19 Stunden laufenden Langzeittest mit der Sensormembran beim ständigen Wechsel zwischen folgenden pH-Werten: 5,00, 5,50, 6,00, 6,50, 7,0C, 7,50, 8,00, 8,50, 9,00, 10,00, 9,00, 8,50, 8,00, 7,50, 7,00, 6,50, 6,00, 5,50 und 5,00. Der Sensor besitzt offensichtlich eine ausgezeichnete Langzeitstabilität und gute Reproduzierbarkeit.

Das folgende Beispiel soll die Herstellung einer solchen Membran nach einem einfachen Verfahren beschreiben, ohne daß aber dadurch die Anwendungsbreite der Methode nur auf dieses spezifische Verfahren eingeschränkt wird.

### Beispiel

### Herstellung einer schnellansprechenden pH-Sensormembran

Man löst 900 mg 2-[4-(4-Hydroxy-1-naphthylazo)-3-nitrophenylsulfonyl]-ethylhydrogensulfat in 1,0 g konzentrierter Schwefelsäure, indem man den Farbstoff vorher fein zerkleinert. Man läßt die Lösung anschließend 30 Minuten in einer trocknen Atmosphäre stehen. Danach gießt man in 1000 ml destilliertes Wasser und neutralisiert mit ca. 1,8 ml einer 32%igen Natronlauge, bis ein Farbumschlag nach grün eintritt.

In diese Lösung hängt man eine cellulose-beschichtete Polyestermembran (z.B. das an sich als beschriftbare Overheadfolie vertrieben Produkt 17703T von Hewlett-Packard, Wien) und rührt die Lösung langsam um. Nach 5 Minuten fügt man 25 g feste Soda zu, nach weiteren 5 Minuten 5,2 ml der 32%igen Natronlauge. Man läßt noch eine Stunde stehen und rührt weiter. Die nun angefärbten Membranen werden mit destilliertem Wasser solange gewaschen, bis das Waschwasser farblos bleibt. Das erhaltene Material zeigt in sauren Lösungen eine gelbe, in alkalischen Lösungen eine blaue Farbe. Der nützliche pH-Bereich liegt zwischen 6 und 9.

In Analogie zu den in Angew. Chemie, 76, 423 (1964) beschriebenen Verfahren können die genannten Farbstoffe immobilisiert werden, wodurch pH-sensitive Membranen entstehen, welche in anderen pH-Bereichen (von 8-11, 11-13 bzw. 1-5) umschlagen.

Die erfindungsgemäßen Sensormembranen finden bevorzugt Anwendung zur Bestimmung von pH-Werten mit Hilfe von Teststreifen mit photometrischer oder reflektometrischer Auswertung, zur Bestimmung des pH-Wertes sehr schwach gepufferter Lösungen (z.B. von Oberflächen- und Regenwasser) und in der Messung physiologischer pH-Werte, gegebenenfalls auch mit Hilfe faseroptischer Lichtwellenleiter.

## Patentansprüche

1. Sensormembran zur reversiblen optischen Anzeige des pH-Wertes einer Probe, mit einem mechanisch stabilen Trägerelement und einer darauf angebrachten Indikator-Farbstoffschicht, **dadurch gekennzeichnet,** daß auf mindestens einer Seite des Trägerelementes eine hydrophile Aufnahmeschicht aus Cellulose, Gelatine, Hydrogel, hydrophilen Polyvinylalkoholen oder Gemischen dieser Substanzen angeordnet ist, welche den Indikator-Farbstoff in immobilisierter Form aufweist.

2. Sensormembran nach Anspruch 1, dadurch gekennzeichnet, daß die Aufnahmeschicht eine Dicke im Bereich von 0,1 bis 0,5 µm aufweist.

3. Sensormembran nach den Ansprüchen 1 und 2, dadurch gekennzeichnet, daß das die Aufnahmeschicht samt Indikator-Farbstoff aufweisende Trägerelement aus hydrophobem, optisch transparentem Material aus der Gruppe: Polyester vom Typ der Phthalsäureester, Polycarbonate, Polyvinylchloride, Polyamide, Silicone, vernetzte Polyacrylamide, Polyvinylalkohole, besteht.

4. Verfahren zur Herstellung einer Sensormembran zur reversiblen optischen Anzeige des pH-Wertes einer Probe, wobei auf ein mechanisch stabiles Trägerelement eine Schicht aus Indikator-Farbstoff aufgebracht wird, **dadurch gekennzeichnet,** daß auf das Trägerelement eine hydrophile Aufnahmeschicht aus Cellulose, Gelatine, Hydrogel, hydrophilen Polyvinylalkoholen oder Gemischen dieser Substanzen aufgebracht wird, in welche der Indikator-Farbstoff eingebracht und immobilisiert wird.

5. Verwendung einer Sensormembran nach einem der Ansprüche 1 bis 3 als Teststreifen zur pH-Bestimmung in ungepufferten oder schwach gepufferten Systemen.

## Claims

1. Sensor membrane for the reversible optical indication of the pH of a sample, having a mechanically stable support element and an indicator dye layer disposed thereon, characterized in that a hydrophilic accommodating layer comprising cellulose, gelatine, hydrogel, hydrophilic polyvinyl alcohols or mixture of these substances is disposed on at least one side of the support element, which layer contains the indicator dye in an immobilized form.

2. Sensor membrane according to claim 1, characterized in that the accommodating layer has a thickness in the range from 0.1 to 0.5 µm.

3. Sensor membrane according to claims 1 and 2, characterized in that the support element, which has the accomodating layer together with the indicator dye, comprises hydrophobic, optically transparant material selected from the group consisting of polyesters of the phthalate type, polycarbonates, polyvinyl chlorides, polyamides, silicones, crosslinked polyacrylamides, and polyvinyl alcohols.

4. Process for fabricating a sensor membrane for reversible optical indicating of the pH of a sample, in which a layer comprising indicator dye is applied onto a mechanically stable support element, characterized in that a hydrophilic accomodating layer comprising cellulose, gelatine, hydrogel, hydrophilic polyvinyl alcohols or mixture of these substances, into which layer the indicator dye is introduced and immobilized, is applied onto the support element.

5. Use of a sensor membrane according to one of claims 1 to 3 as a test strip for determining the pH in unbuffered or weakly buffered systems.

## Revendications

1. Membrane sensible pour l'indication optique réversible du pH d'un échantillon, comprenant un élément support mécaniquement stable portant une couche d'indicateur coloré, caractérisée en ce que, sur une face au moins de l'élément support, on a appliqué une couche réceptrice hydrophile en cellulose, gélatine, hydrogel, polyalcools vinyliques hydrophiles ou en un mélange de ces substances, qui contient l'indicateur coloré sous une forme immobilisée.

2. Membrane sensible selon revendication 1, caractérisée en ce que la couche réceptrice a une épaisseur dans l'intervalle de 0,1 à 0,5 µm.

3. Membrane sensible selon les revendications 1 et 2, caractérisée en ce que l'élément support portant la couche réceptrice avec l'indicateur coloré consiste en une matière optiquement transparente hydrophobe choisie dans le groupe des polyesters du type des esters d'acide phtalique, des polycarbonates, des polychlorures de vinyle, des polyamides, des silicones, des polyacrylamides réticulés, des polyalcools vinyliques.

4. Procédé pour préparer une membrane sensible servant à l'indication optique réversible du pH d'un échantillon, par application d'une couche d'indicateur coloré sur un élément support mécaniquement stable, caractérisé en ce que l'on applique sur l'élément support une couche réceptrice hydrophile en cellulose, gélatine, hydrogel, polyalcools vinyliques hydrophiles ou en un mélange de ces substances, dans laquelle on a incorporé et immobilisé l'indicateur coloré.

5. Utilisation d'une membrane sensible selon l'une des revendications 1 à 3 sous forme de bandes tests pour la détermination du pH dans des systèmes non tamponnés ou faiblement tamponnés.
